(19) Europäisches Patentamt
European Patent Office
Office européen des brevets

(11) Numéro de publication: **0 002 159**
**B1**

(12) **FASCICULE DE BREVET EUROPEEN**

(45) Date de publication du fascicule de brevet: **16.09.81**

(21) Numéro de dépôt: **78400187.7**

(22) Date de dépôt: **17.11.78**

(51) Int. Cl.³: **C 08 F 4/46**, C 08 G 63/10, C 08 G 65/10, C 08 G 69/20

(54) **Procédé de polymérisation anionique en masse à l'aide d'amidure d'un métal alcalin et d'un hydroxylate du même métal alcalin.**

(30) Priorité: **23.11.77 FR 7735221**

(43) Date de publication de la demande:
**30.05.79 Bulletin 79/11**

(45) Mention de la délivrance du brevet:
**16.09.81 Bulletin 81/37**

(84) Etats Contractants Désignés:
**BE CH DE GB LU NL SE**

(56) Documents cités:
**DE - A - 2 449 784**
**FR - A - 1 219 270**
**FR - A - 2 352 834**
**US - A - 3 274 169**

(73) Titulaire: **SOCIETE NATIONALE DES POUDRES ET EXPLOSIFS**
**12, quai Henri IV**
**F-75181 PARIS CEDEX 04 (FR)**

(72) Inventeur: **Boileau, Sylvie**
**38-40, rue des Cordelières**
**F-75013 Paris (FR)**
Inventeur: **Caubere, Paul**
**3, rue Emile Gallé**
**F-54000 Nancy (FR)**
Inventeur: **Ndebeka, Gilberte**
**11, place de Paris**
**F-54500 Vandoeuvre (FR)**
Inventeur: **Lecolier, Serge**
**3, allée des Cartelines**
**F-91510 Janville sur Juine (FR)**
Inventeur: **Raynal, Serge**
**Orée de Sénart Bâtiment Hérédia**
**F-91210 Draveil (FR)**

**EP 0 002 159 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de polymérisation anionique en masse à l'aide d'amidure d'un métal alcalin et d'un hydroxylate du même métal alcalin

La présente invention a pour objet un procédé de polymérisation et de copolymérisation anionique des monomères vinyliques, diéniques et hétérocycliques.

L'utilisation des techniques de polymérisation anionique s'accompagne de contraintes que pèsent lourdement sur le développement généralisé de ces dernières. En effet, il est nécessaire d'opérer dans des conditions de propreté des réactifs et d'absence d'humidité très strictes et d'utiliser des solvants polaires coûteux et des amorceurs de réaction très sensibles à l'humidité, également coûteux et d'un emploi délicat.

Au cours de la dernière décennie de réels progrès ont été accomplis sur le plan de l'efficacité et/ou des coûts de certains aspects de la polymérisation anionique. Toutefois il reste encore un réel besoin en procédés souples et efficaces, permettant de bas prix de production.

Le procédé selon l'invention a pour avantages une applicabilité très générale, un assouplissement considérable des conditions opératoires et un abaissement sensible des coûts de production, dans tous ses aspects.

Le procédé de polymérisation et de copolymérisation anionique des monomères vinyliques, diéniques et hétérocycliques en l'absence de solvant selon l'invention est caractérisé en ce qu'on effectue la réaction en présence d'un amorceur constitué d'un amidure alcalin choisi dans le groupe constitué par le sodium, le potassium et le lithium et du sel du même métal alcalin d'au moins un composé organique hydroxylé.

Selon une première variante de l'invention, l'amorceur est obtenu en évaporant à sec un mélange de l'amidure alcalin et d'au moins un composé organique hydroxylé dans un solvant organique aprotique et peu sensible aux attaques des bases.

Selon une deuxième variante de l'invention, l'amorceur est obtenu après mélange intime de l'amidure alcalin avec au moins un composé organique hydroxylé, en l'absence de solvant.

L'invention consistant essentiellement dans le choix d'un amorceur, on précise dans ce qui suit la nature des constituants de l'amorceur selon l'invention, la proportion relative de ces différents constituants ainsi que les conditions de préparation dudit amorceur.

Comme amidures alcalins, conformément à la présente invention, on peut utiliser l'amidure de sodium, l'amidure de potassium ou l'amidure de lithium. L'amidure de sodium a l'avantage d'être un produit commercial qui n'est pas très coûteux.

L'amidure de potassium peut être facilement fabriqué à l'aide de potassium et d'ammoniac liquide, mais il est plus coûteux que l'amidure de sodium. L'amidure de lithium est moins intéressant que les précédents car c'est un irritant des voies respiratoires et son efficacité, dans le cadre de l'invention, est, en moyenne, en deçà de celles des amidures précédents, sauf dans la cas des siloxanes.

Comme composés organiques hydroxylés convenant particulièrement bien pour la préparation des amorceurs utilisés dans le procédé selon l'invention, on peut citer

— les alcools primaires de formule $R—OH$ où R est un groupe alkyle linéaire, comportant, de préférence, plus de 2 atomes de carbone ou un groupe alkyle ramifié ou un groupe alkyle comportant un groupe cycloalkyle ou un groupe éther cyclique ou un groupe alkyle linéaire comportant au moins une insaturation éthylénique et au moins 2 atomes de carbone ou comportant au moins un groupe aromatique,

— les alcools secondaires ou tertiaires de formule $R'—OH$ où R' est un groupe alkyle linéaire ou ramifié ou un groupe cycloalkyle ou un groupe polycycloalkyle,

— les alcools aromatiques de formule $R''—OH$ où R'' est un groupe aryle ou polyaryle, éventuellement substitué par des groupes alkyle, alkoxy ou aminoalkyle,

— les glycols bi-tertiaires à chaîne alkyle où les groupes hydroxyles sont en position -1,2, -1,3 ou -1,4,

— les éthers alcools amino alcools, polyéther alcools, polyamino alcools et polyaminoéthers alcools de formule $R—(Y—CHR_1—CHR_2)_n\ OH$ (I) où R est un groupe alkyle, cycloalkyle, arylalkyle, alkylaryle ou aryle, où Y est un atome d'oxygène ou un atome d'azote substitué par un groupe alkyle (les Y pouvant être tous des oxygènes ou tous des azotes substitués ou bien les uns des oxygènes, les autres des azotes substitués), où $R_1$ et $R_2$ sont identiques ou différents et sont un atome d'hydrogène, un groupe méthyle ou un groupe éthyle, Y étant forcément un oxygène lorsque $R_1$ et/ou $R_2$ sont un groupe méthyle ou éthyle, et où n est un nombre entier de 1 à 10,

— les éthers alcools de formule:

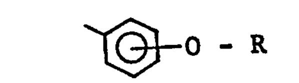

où R a la signification précédente et où R' est un atome d'hydrogène ou un groupe

— énols des cétones de formule 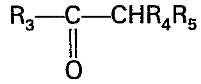

(alcools vinyliques) où $R_3$ est un groupe hydrocarboné et où $R_4$ et $R_5$ sont identiques ou différents et sont un atome d'hydrogène ou un groupe hydrocarboné.

Bien d'autres composés organiques hydroxylés peuvent également convenir tels que les diolamines telles que celles de formule

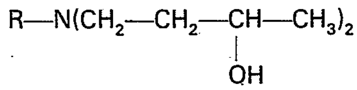

où R = alkyle (notamment méthyle), les aminoalcools tels que ceux de formule

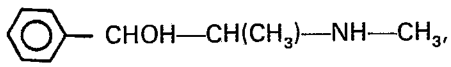

les mélanges industriels de monoéthers de polyalkoxy glycols de formule (I) où Y est l'oxygène et n a une valeur telle que les chaînes contiennent jusqu'à 100 atomes de carbone, les trialkylsilanols (autre que le triméthyl silanol). En plus des précédents, d'autres composés organiques hydroxylés encore sont utilisables dans le procédé selon l'invention. Il s'agit toutefois, comme les derniers précités, de composés dont l'intérêt technique et/ou économique est relativement beaucoup plus faible que celui des premiers composés précités. D'une manière générale on évitera d'utiliser les composés organiques hydroxylés porteurs d'une autre fonction capable de réagir avec l'amidure alcalin.

Pour préparer l'amorceur, le nombre de molécules d'amidure à utiliser par fonction hydroxyle du composé organique hydroxylé est, de préférence, de l'ordre de 3, c'est à dire compris entre 2 et 3,5. Ce nombre peut être légèrement plus élevé sans inconvénient, notamment dans le cas où le taux d'humidité dans l'appareillage, dans le monomère ou dans le composé organique hydroxylé doit être réduit pour pouvoir mener la polymérisation dans de bonnes conditions. Dans ce cas, en effet, l'excès d'amidure neutralise l'humidité présente à bon compte sans produire d'espèces susceptibles d'influer sensiblement sur le déroulement ultérieur de la réaction. Toutefois si ce nombre est supérieur à 10 par exemple, on risque d'obtenir un amorceur peu ou pas réactif. Plus généralement l'amorceur obtenu dans ce cas cause l'apparition d'un long temps de latence entre l'introduction du monomère et la polymérisation de ce dernier. Si en revanche on utilise moins de deux moles d'amidure par fonction hydroxyle, l'amorceur est d'une efficacité moindre, voire peut perdre totalement son activité notamment s'il est de plus employé en quantité particulièrement faible par rapport au monomère et/ou si le taux initial d'humidité dans l'appareillage et les réactifs est élevé. En d'autres termes, si l'on se place au coeur du milieu réactionnel, le rapport molaire optimal de l'amidure aux fonctions "alkoxyde alcalin" se situe aux environs de 2.

Il a été exposé que, selon une première variante du procédé selon l'invention, l'amorceur utilisé est préparé dans un solvant organique qu'on évapore ensuite à sec. Tout solvant organique aprotique et peu sensible aux attaques par les bases convient pour cette préparation. D'une manière générale on préfère utiliser des solvant peu ou pas polaires, d'un prix généralement moins élevé que les solvants polaires, lesquels sont par ailleurs relativement plus sujets à une dégradation par l'amorceur ou ses composants, surtout à une température supérieure à 25°C. En conséquence, on utilise de préférence un solvant aprotique de constante diélectrique inférieure à 10 à 25°C tels que les éthers et les polyéthers linéaires ou cycliques comme le tétrahydrofuranne (THF), le diméthoxyéthane (DME), les glymes, les diglymes, les triglymes, les alcanes tels que l'hexane ou l'heptane, les cycloalcanes tels que le cyclohexane ou les arènes tels que le benzène ou le toluène.

Lorsqu'on utilise des solvants comportant des ponts éthers, il importe d'éliminer soigneusement l'oxygène et les peroxydes contenus, par des méthodes connues.

La préparation de l'amorceur est avantageusement effectuée en général dans le réacteur qui sert ensuite à la polymérisation, car cela permet de réduire l'introduction d'humidité dans l'appareillage. L'ordre d'introduction des réactifs importe peu mais en règle générale il est préférable d'introduire le compose organique hydroxylé sur l'amidure l'un et/ou l'autre étant en solution ou en suspension dans le solvant précité. Le solvant peut également être introduit seul, en premier ou en dernier. La réaction de formation de l'amorceur est pratiqué de préférence entre 20 et 60°C, pour obtenir une durée satisfaisante. En dessous de 0°C, la formation de l'amorceur devient généralement inexistante, alors qu'au dessus de 60°C les risques de dégradation de l'amidure, de l'amorceur formé ou du solvant augmentent. Il est recommandé d'agiter le milieu pendant toute la durée de réaction, laquelle est de préférence d'au moins une heure. Quand on se place dans des conditions défavorables (adoption d'une valeur non préférée pour au moins un des paramètres exposés ci-avant), une durée supérieure à 4 heures peut s'avérer nécessaire.

La réaction de formation de l'amorceur s'accompagne généralement, lors de cette première

variante, d'un dégagement d'ammoniac provenant de l'action de l'anion amidure sur le proton du composé organique hydroxylé. Ce phénomène généralement bien perceptible n'est pas une condition suffisante de succès de l'opération puisque ce dégagement peut aussi être dû à l'action de l'amidure sur l'humidité présente dans le milieu. Par ailleurs il ne prouve au mieux que la formation d'hydroxylate alcalin dont la seule coexistence avec de l'amidure ne suffit pas à obtenir l'amorceur selon l'invention puisque celui-ci est constitué par une association moléculaire d'amidure et d'hydroxylate. Aussi, bien que cette association moléculaire se forme plutôt facilement, est-il conseillé de se placer dans au moins une des conditions préférées exposées plus haut pour obtenir un amorceur avec un rendement et une qualité convenable.

Une fois la réaction de formation de l'amorceur achevée, le solvant utilisé dans la présente variante est évaporé à sec, par exemple en plaçant le réacteur sous vide. On obtient ainsi une masse pulvérulente ou pâteuse suivant la nature du composé organique hydroxylé utilisé et la quantité relative d'amidure par rapport à ce dernier. Cette masse peut être fractionnée si on le désire, et manipulée de préférence dans des conditions relativement anhydres, encore que le faible prix de ses constituants autorise des pertes par hydrolyse, par ailleurs largement compensées par une commodité d'emploi accrue. Ainsi on peut préparer de grandes quantités d'amorceur à l'avance, comme il vient d'être exposé, et puiser dans cette réserve la quantité désirée au moment de chaque polymérisation. On peut également conserver l'amorceur en solution-suspension, en prélever la quantité désirée et évaporer le solvant à sec seulement au moment de la polymérisation.

Il est tout à fait surprenant qu'un tel amorceur, dont la demanderesse a pu montrer, dans ses travaux antérieurs, l'efficacité lors de polymérisation en présence de solvant, possède une excellente efficacité à sec, alors que son activité est attribuable à des associations moléculaires dont la stabilité paraissait jusqu'à présent conditionnée par l'existence d'un environnement solvatant. En effet il existe de nombreux exemples de composés qui ont une réactivité très différente quand de cristallisés on les utilise en solution. Il en est ainsi des dérivés organomagnésiens de Grignard dont la structure n'est pas du tout la même selon qu'on considère ces composés en solution ou à l'état cristallisé.

Il est encore plus surprenant que, selon une deuxième variante de l'invention, l'amorceur utilisé est préparé par mélange intime à sec de l'amidure alcalin avec le composé organique hydroxylé, donc en l'absence de solvant. Dans ce cas on introduit le composé organique hydroxylé et l'amidure, de préférence le premier sur le second, dans un réacteur qui, si l'on y trouve avantage, peut être celui où l'on effectue ensuite la réaction de polymérisation, après quoi on réalise le mélange intime de ces réactifs, à l'aide de tout moyen connu. Cette opération de trituration est commodément réalisée, avec un résultat satisfaisant, en utilisant un réacteur muni d'un dispositif d'agitation et se plaçant à une température comprise entre 20 et 60°C de préférence. En général, la formation de l'amorceur utilisé dans la présente invention est, selon cette variante de réalisation, satisfaisante au bout d'au moins une heure et, dans la plupart des cas, au bout d'un temps relativement plus long que si l'on procède selon la première variante.

Selon une nuance de la variante que vient d'être exposée, l'amorceur est formé en mettant en présence l'amidure et le composé organique hydroxylé, en versant le monomère sur le tout, puis en agitant, de préférence, dans les conditions utilisées dans les variantes précédentes. Ce mode de réalisation revient à former l'amorceur in situ dans le monomère jouant le rôle de solvant avant celui de réactif, compte tenu du temps de latence qui existe généralement entre la mise en présence des constituants de l'amorceur et la formation des associations moléculaires qui constituent ce dernier. On conçoit bien, quoique cela présente peu d'intérêt, qu'on peut également introduire les trois espèces impliquées dans un ordre différent.

Il est bien clair qu'il est possible d'utiliser, sans sortir du cadre de la présente invention, un amorceur qui serait formé selon l'une des deux variantes précédentes ou selon la nuance de la deuxième variante précédente, dans lesquelles le composé organique hydroxylé serait directement remplacé par l'hydroxylate du métal alcalin correspondant au métal de l'amidure. Ce cas, qui autoriserait éventuellement à utiliser une molécule d'amidure de moins, est cependant d'un faible interêt car il ne permet pas de se dégager de l'une des contraintes de l'art antérieur qui consiste à préparer à l'avance l'amorceur: en effet il faudrait effectivement préparer à part et à l'avance ledit hydroxylate alcalin.

Comme tout procédé de polymérisation anionique, le procédé selon l'invention comporte une phase d'amorçage, une phase de propagation et une phase de terminaison.

La température à laquelle on effectue la réaction de propagation proprement dite n'est pas forcément la même que celle utilisée pour former l'amorceur et se situe entre −80 et +70°C. Cette température peut varier au cours de la polymérisation ou entre les phases de certains types de copolymérisation.

La quantité d'amorceur à utiliser par rapport à une quantité donnée de monomère à traiter, dépend de la masse moléculaire souhaitée pour le polymère. Celle-ci sera généralement d'autant plus faible que le rapport molaire amorceur/monomère sera plus élevé. Dans la moyenne on emploie un rapport d'environ 1%, étant bien entendu que la bas prix de l'amorceur autorise plus couramment que selon les procédés antérieurs, l'emploi de rapports plus forts.

Le durée de polymerisation varie de quelques secondes à 24 et même 48 heures et dépend de nombreux facteurs, notamment de la nature du monomère.

Les monomères intéressés par l'invention sont ceux dont il est connu qu'ils polymérisent par un mécanisme purement anionique, ou, si l'on préfère, qui sont susceptibles de polymériser anioniquement par ouverture d'une double liaison éthylénique ou d'un hétérocycle. Compte tenu que les débuts de la polymérisation anionique remontent à plus d'un siècle, on conçoit que la liste de ces monomères est fort longue, et ce mécanisme est très bien connu. Il convient toutefois de bien voir que ce mécanisme est le même que le monomère soit un hétérocycle ou qu'il comporte une insaturation éthylénique ou aldéhydique (qui peut peut-être considérée comme un hétérocycle à deux atomes), puisque l'initiation donne lieu par coupure d'une liaison à la formation d'un monomère-anion lequel, quelle que soit la nature de l'atome qui porte la charge négative, attaque une nouvelle molécule de monomère qui porte à son tour la charge négative et ainsi de suite, jusqu'à épuisement du monomère ou terminaisons de la réaction. On peut consulter à ce sujet par exemple l'ouvrage du Professeur Georges CHAMPETIER "Chimie Macromoléculaire", Volume I, Editions Hermann, Paris (1969).

Comme monomères concernés on peut toutefois citer les monomères suivants, sans que cette liste prétende être exhaustive.

Pour les monomères vinyliques, ceux de formule générale

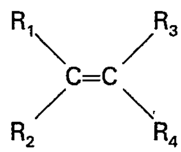

où:

$R_1 = R_2 = R_3 = R_4 = H$ (éthylène)

$R_1 = R_2 = R_3 = H$ et $R_4$ = alkyle

$R_4$ = 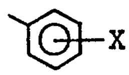 où X = H, Cl, $—OCH_3$ ou $—C(CH_3)_3$

$R_4$ = 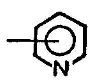 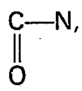, 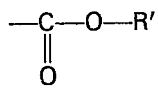 (ou R' = alkyle ou cycloalkyle), 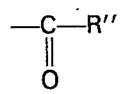 (où R'' = alkyle)

$R_4$ = 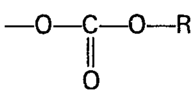 (où R = alkyle, notamment méthyle, ou aryle, notamment phényle)

$R_1 = R_2 = H$, $R_3 = —CH_3$, $R_4$ = phényle, cyano ou 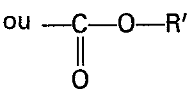 (R' = alkyle ou cycloalkyle).

Pour les monomères hétérocycliques, les oxydes d'alkylène, les sulfures d'alkylène, les lactones, les lactames, les thiétanes, les siloxanes, les carbonates cycliques, tels que l'oxyde d'éthylène, l'oxyde de propylène, le sulfure de propylène, la $\beta$-propiolactone, l'$\varepsilon$-caprolactone, la pivalolactone, l'$\varepsilon$-caprolactame, l'hexaméthyl cyclotrisiloxane, l'octaméthylcyclo tétrasiloxane, le carbonate de propylène glycol de formule

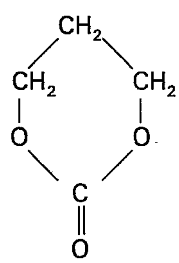

le carbonate de néopentyl glycol de formule

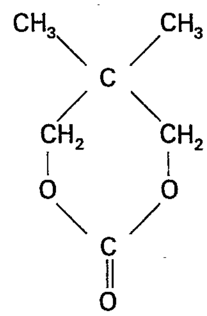

etc.

Pour les monomères diéniques conjugués, ceux de formule générale:

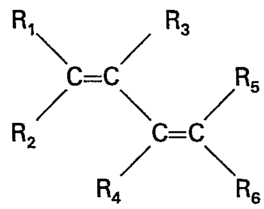

où:

$R_1 = R_2 = R_3 = R_4 = R_5 = R_6 = H$ (butadiène-1,3)
$R_1 = R_2 = R_4 = R_5 = R_6 = H$ et $R_3$ = alkyle ou aryle
$R_1 = R_2 = R_3 = R_4 = R_5 = H$ et $R_6$ = alkyle, aryle, nitrile ou nitro
$R_1 = R_2 = R_5 = R_6 = H$ et $R_3 = R_4 = —CH_3$
$R_1 = CH_3$ et $R_2 = R_3 = R_4 = R_5 = R_6 = H$ ou alkyle
$R_1 = R_3 = R_4 = R_5 = H$ et $R_1 = R_6$ = phényle.

Pour les diènes à doubles liaisons éthyléniques non directement conjuguées, le divinylbenzène, les cyclohexadiènes substitués tels que le tétraméthyl-3,3,6,6 hexadiène-1,2,-4,5, les carbonates de vinyle ou d'allyle de polyols ou de polyéthers polyols tels que le carbonate d'allyle glycol.

Le procédé selon l'invention est applicable aux réactions d'homopolymérisation et aux réactions de copolymérisation, soit de monomères de la même familles différentes.

Les monomères sont purifiés avant emploi d'une manière connue et habituelle qui dépend de leur nature et qui peut aller de la simple distillation, généralement employée, à la double distillation sur tamis moléculaire, hydrure de calcium, métal alcalin ou même sur polymère vivant (isopropényl — lithium). Toutefois le procédé selon l'invention s'accomode de la présence d'humidité dans le monomère, étant donnée la capacité que possède l'amidure, associé ou non, présent dans le système initiateur, de neutraliser cette humidité. Il est conseillé d'utiliser des composés organiques hydroxylés convenablement purifiés alors qu'on peut s'accomoder d'amidure alcalin mélangé avec de l'hydroxyde formé à ses dépens, pour autant que l'on sache quand même le titre exact en amidure pur de ce mélange, afin de pouvoir respecter les proportions préconisées plus haut pour la confection de l'initiateur. Il est préféré, toutefois, d'utiliser de l'amidure de pureté commerciale ou mieux, de pureté analytique.

La granulométrie de l'amidure alcalin n'est pas critique et intervient seulement sur la durée de la période de latence entre le moment de la mise en présence de l'initiateur et du monomère et la polymérisation de ce dernier. En général, l'initiateur se forme d'autant plus vite et, pour un monomère donné, il est d'autant plus rapidement actif qu'il se présente initialement sous un état plus divisé.

Le procédé de polymérisation selon l'invention, qui est pratiqué de préférence sous atmosphère de gaz inerte (notamment l'azote et l'argon) ou sous vide, est particulièrement intéressant quand on utilise les initiateurs suivants, qu'on a désigné, pour simplifier par le composé organique hydroxylé à associer à l'amidure de sodium, de potassium ou de lithium: alcool primaire linéaire ou ramifié, tel que:

— méthyl-2 propanol
— diméthyl-2,2 propanol
— dodécanol, butanethiol

alcool comportant un groupe hétérocyclique tel que:

— tétrahydrofurfurol

alcool comportant une insaturation éthylénique ou aromatique tel que:

— alcool allylique

alcool secondaire ou tertiaire tel que:

— diméthyl-2,6 heptanol-3

— isopropanol
— néopentanol
— t-butanol
— méthyl-2 hexanol-2
— méthyl-2 butanol-2
— n-butyl-5 nonanol-5
alcool alicyclique tel que:
— méthyl-2 cyclohexanol
alcool aromatique tel que:
— diéthylaminophénol, thiophénol
polyol, notamment glycol, tel que:
— diméthyl-2,5 hexane diol-2,5
éther alcool tel que:
— méthyl éther d'éthylène glycol
— butyl éther d'éthylène glycol
— phényl éther d'éthylène glycol
— méthoxyphénylméthanol
— di(méthoxyphényl) méthanol
polyéther alcool tel que:
— méthyl éther de diéthylène glycol
— éthyl éther de diéthylène glycol
— éthyl éther de diéthylène glycol
— butyl éther de diéthylène glycol
— phényle éther de diéthylène glycol
— décyle éther de diéthylène glycol
— éthyl éther de triéthylène glycol
— butyl éther de triéthylène glycol
— éthyl éther du pentaéthylène glycol
— éthyl éther de l'hexaéthylène glycol
énol de cétone tel que:
— diéthyl cétone (forme énolique)
— méthylphényl cétone (forme énolique).

Il faut noter que chacun des amorceurs utilisables dans le procédé selon l'invention possède un spectre d'activité propre vis à vis de chaque monomère, si bien que ledit procédé permet de répondre à pratiquement tous les souhaits quant aux charactéristiques des polymères finaux.

La terminaison de la réaction peut être réalisée de manière connue, par exemple par introduction d'une petite quantité d'un agent protonant tel qu'un alcool (le méthanol ou l'hexanol) ou en précipitant le milieu réactionnel dans un solvant dont il est facile de se débarrasser par filtration, tel que le méthanol.

En ce qui concerne le temps de latence constaté avant le démarrage de la réaction, il dépend pour une part importante de la variante utilisée pour préparer l'initiateur. Toutes choses égales par ailleurs le temps de latence est d'autant plus court que le monomère a une constante diélectrique plus élevé à la température de la polymérisation. De plus ce temps augmente généralement selon la séquence: initiateur préparé en milieu solvant (latence nulle ou très courte) $<$ initiateur préparé in situ dans le monomère $<$ initiateur préparé par trituration à sec (latence généralement non nulle). En revanche on a observé que les masses moléculaires des polymères obtenus étaient parallèlement d'autant plus élevées et polydispersées que la latence est longue. L'augmentation de la dispersion et de la valeur des masses est également constatée lorsqu'on diminue la proportion molaire amidure/composé organique hydroxylé. Enfin, et c'est là un avantage précieux du procédé selon l'invention par rapport aux éventuels autres procédés de polymérisation anionique en masse, les polymères et copolymères obtenus par le procédé selon l'invention portent une fonction amino à l'une au moins de leurs extrémités.

Cette fonctionnalisation directe des polymères obtenus grâce à l'invention, jointe notamment au fait que l'amorceur utilisé est peu coûteux et d'un emploi à plusieurs points de vue plus commode que les amorceurs classiques et au fait qu'aucune élimination fastidieuse de solvant n'est nécessaire à la fin du procédé, montre l'importante progrès technique apporté par la présente invention.

Compte tenu qu'il permet d'obtenir des polymères d'une grande variété de masse moléculaire moyenne, de distribution de masses moléculaires et de microstructure, le procédé selon l'invention trouve son application aussi bien dans la fabrication de polymères de grande diffusion que dans celle de polymères spéciaux.

A titre d'illustrations nullement limitatives du procédé selon l'invention, on donne les exemples suivants concernant la polymérisation de monomères représentant typiquement l'une des trois grandes familles auxquelles ils appartiennent. Ces exemples montrent en outre le vaste champ de possibilités offert par l'invention.

Exemples 1 à 20

Polymérisation de styrène.

A) L'amorceur a été préparé dans un solvant qu'on a évaporé ensuite, après quoi la polymerisation a été effectuée en l'absence de solvant. On a introduit dans le réacteur prévu pour la polymérisation $25.10^{-3}$ mole d'amidure de sodium et $8{,}3.10^{-3}$ mole du composé organique hydroxylé (rapport molaire: 3) mentionné dans la deuxième colonne du tableau 1. Dans chaque cas on a rajouté 20 ml du solvant mentionné à la colonne 3 et on a chauffé le mélange réactionnel pendant 2 heures à 40°C, tout en agitant, après quoi on a évaporé ledit solvant à sec.

A travers la paroi du capuchon à jupe rabattable dont avait été muni le réacteur, on a injecté, à l'aide d'une seringue hypodermique, 10 ml de styrène fraichement distillé sur l'amorceur qui se présentait à l'état d'une poudre mobile. Au bout de 18 heures et à la température figurée à la colonne 4 on a stoppé la réaction en précipitant le mélange dans du méthanol, on a filtré le polymère et on l'a séché. Ses caractéristiques et le rendement du procédé ont été indiqué dans les colonnes suivantes; dans le tableau suivant ainsi que dans les tableaux suivants, $M_n$ désigne la masse moléculaire en nombre, Mp la masse moléculaire en poids et I l'indice de polydispersité du polymère, égal au rapport $Mp/M_n$.

TABLEAU 1

| n° ex | Composé organique hydroxylé | Solvant | Température | Rendement | $\frac{Mp}{Mn} = I$ |
|---|---|---|---|---|---|
| 1 | $C_4H_9(OCH_2CH_2)_2OH$ | THF | 45°C | 100 % | $\frac{250\ 000}{50\ 000} = 5$ |
| 2 | tétrahydrofurfurol | THF | 45°C | 59 % | $\frac{420\ 000}{42\ 000} = 10$ |
| 3 | $C_4H_9(OCH_2CH_2)_2OH$ | Toluène | 45°C | 100 % | $\frac{296\ 000}{37\ 000} = 8$ |
| 4 | tétrahydrofurfurol | Toluène | 45°C | 100 % | $\frac{150\ 000}{30\ 000} = 5$ |
| 5 | tBuOH | Toluène | 45°C | 20 % | $\frac{170\ 000}{17\ 000} = 10$ |
| 6 | néopentanol | THF | 45°C | 11 % | $\frac{750\ 000}{100\ 000} = 7{,}5$ |
| 7 | diéthylcétone (enol) | THF | 45°C | 11 % | $\frac{400\ 000}{70\ 000} = 5{,}7$ |
| 8 | i-PrOH | THF | 45°C | 22 % | $\frac{1\ 500\ 000}{250\ 000} = 6$ |
| 9 | $C_2H_5(OCH_2CH_2)_2OH$ | THF | 25°C | 93 % | $\frac{1\ 000\ 000}{45\ 000} = 22$ |

On a ensuite étudié l'évolution des caractéristiques du polymère et du rendement du procédé en procédant comme précédemment pour préparer l'amorceur (dans le THF), mais en faisant varier le rapport molaire amidure/composé organique hydroxylé (en l'occurrence, le t-butanol). La polymérisation a été effectuée dans chaque cas à 45°C et stoppée au bout de 18 heures. Les résultats sont regroupés dans le tableau 2.

TABLEAU 2

| n° ex | Rapport | Rendement | Mn | Mp | I |
|---|---|---|---|---|---|
| 10 | 2 | 37 % | 70 000 | 450 000 | 6,5 |
| 11 | 3 | 56 % | 125 000 | 750 000 | 6 |
| 12 | 3,3 | 70 % | 100 000 | 800 000 | 8 |
| 13 | 5 | 46 % | 45 000 | 700 000 | 15,5 |
| 14 | 7 | 36 % | 85 000 | 850 000 | 10 |
| 15 | 13 | 31 % | 75 000 | 1 200 000 | 16 |

On a enfin effectué un essai (45°C, 18 heures) à l'aide d'amorceur préparé à partir de $25.10^{-3}$ mole de $NaNH_2$ et $5.10^{-3}$ mole de diméthyl-1,6 hexanediol-2,5. On a obtenu un rendement de 10% d'un polymère de caractéristiques: Mn = 75 000, Mp = 650 000, I = 8,5 (example 16).

B) L'amorceur a été préparé sans solvant et la polymérisation a été effectuée également en l'absence de solvant.

On a employé $25.10^{-3}$ mole de $NaNH_2$ et $8,3.10^{-3}$ mole de composé organique hydroxylé (colonne 2). On a trituré ces ingrédients en utilisant l'agitation du réacteur prévu pour la polymérisation, pendant 2 heures, à 40°C, puis on a injecté 10 ml de styrène. Au bout respectivement d'une heure (essais 17 à 19) et de 18 heures (essai 20) à 35°C on a obtenu les polymères de caractéristiques indiquées dans le tableau 3.

TABLEAU 3

| n° ex | Composé organique hydroxylé | Rendement | Mn | Mp | I |
|---|---|---|---|---|---|
| 17 | $C_4H_9(OCH_2CH_2)_2OH$ | 100 | 3 300 | 1 500 000 | 45 |
| 18 | t-BuOH | 100 | 15 000 | 100 000 | 6,6 |
| 19 | tétrahydrofurfurol | 100 | 22 000 | 200 000 | 9,9 |
| 20 | $C_4H_9(OCH_2CH_2)_2OH$ | 100 | 1 500 000 | 1 000 000 | 6,6 |

Exemples 21 à 27

Polymérisation du méthacrylate de méthyle.

On a utilisé $25.10^{-3}$ mole de $NaNH_2$ et $8,3.10^{-3}$ mole de composé organique hydroxylé pour préparer l'amorceur en présence de solvant (exemple 21, toluène et exemples 22 à 24, THF) qu'on a évaporé ensuite ou sans solvant (exemples 25 à 27), en deux heures à 40°C. On a ensuite polymérisé 10 ml de méthacrylate de méthyle, par injection dans le réacteur du monomère fraîchement distillé. Au bout du temps indiqué à 35°C, on a obtenu les polymères décrits dans le tableau 4. Les rendements ont été de 100% dans chaque cas.

TABLEAU 4

| n° ex | Composé organique hydroxylé | Durée de Polymérisation | Mn |
|---|---|---|---|
| 21 | $C_4H_9(OCH_2CH_2)_2OH$ | 15 min | 20 000 |
| 22 | $C_4H_9(OCH_2CH_2)_2OH$ | 2 min | 35 000 |
| 23 | t-BuOH | 30 min | 18 000 |
| 24 | tétrahydrofurfurol | 1 h | 20 000 |
| 25 | $C_4H_9(OCH_2CH_2)_2OH$ | 1 h | 52 000 |
| 26 | t-BuOH | 1 h | 38 000 |
| 27 | tétrahydrofurfurol | 1 h | 40 000 |

Exemples 28 à 39

Polymérisation d'acrylonitrile (AN) et de méthacrylonitrile (MAN). On a procédé comme dans les exemples 21 à 27, tantôt l'amorceur a été préparé en présence de solvant (exemples 28 à 33), tantôt sans solvant (exemples 34 à 39). Les paramètres de la polymérisation et les caractéristiques des polymères obtenus sont rapportés dans le tableau 5.

TABLEAU 5

| n° ex | Composé organique hydroxylé | Solvant | Monomère volume en ml | Durée (1) | Rendement | Mn |
|---|---|---|---|---|---|---|
| 28 | $C_4H_9(OCH_2CH_2)_2OH$ | THF | AN, 10 | inst. | 100 % | 12 000 |
| 29 | tétrahydrofurfurol | THF | AN, 10 | inst. | 100 % | 10 000 |
| 30 | t-BuOH | THF | AN, 10 | inst. | 100 % | 9 500 |
| 31 | $C_4H_9(OCH_2CH_2)_2OH$ | Toluène | AN, 10 | inst. | 100 % | 16 300 |
| 32 | tétrahydrofurfurol | Toluène | AN, 10 | inst. | 100 % | 18 000 |
| 33 | t-BuOH | Toluène | AN, 10 | inst. | 100 % | 12 000 |
| 34 | $C_4H_9(OCH_2CH_2)_2OH$ | – | AN, 5 | 30 min | 100 % | 25 000 |
| 35 | t-BuOH | – | AN, 4 | 1 h | 100 % | 23 000 |
| 36 | tétrahydrofurfurol | – | AN, 7 | 1 h | 100 % | 19 500 |
| 37 | $C_2H_5(OCH_2CH_2)_2OH$ | – | MAN, 3 | 5 min | 80 % | 17 500 |
| 38 | t-BuOH | – | MAN, 5 | 15 min | 75 % | 8 500 |
| 39 | tétrahydrofurfurol | – | MAN, 8 | 30 min | 100 % | 12 300 |

(1) Par durée instantanée, on entend que la réaction est achevée dès qu'on a terminé l'injection du monomère.

Exemples 40 et 41

Polymérisation du carbonate de vinyle et de méthyle de formule

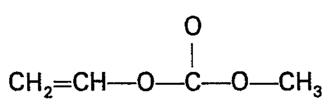

On a préparé l'initiateur à partir de $25.10^{-3}$ mole de $NaNH_2$ et $8{,}3.10^{-3}$ mole de $C_4H_9(OCH_2CH_2)_2OH$ (exemple 40) ou de tétrahydrofurfurol (exemple 41), dans le THF. Après 2 heures, à 40°C, le THF est évaporé à sec du mélange obtenu. On a polymérisé 10 ml du monomère à 35°C et stoppé la réaction au bout de 18 heures.

On a obtenu les polymères suivants:

exemple 40 — rendement 20%, Mn = 13 500

exemple 41 — rendement 50%, Mn = 13 000

Exemples 42 à 48

Polymérisation d'isoprène.

On a opéré comme pour les exemples 28 à 39. Les paramètres de la polymérisation et les caractéristiques des polymères obtenus sont rapportés dans le tableau 6. La durée de la réaction a été de 18 heures sauf à l'exemple 47 (4 heures).

TABLEAU 6

| n° ex | Composé organique hydroxylé | Solvant | Monomère Volume | Rendement | Mn |
|---|---|---|---|---|---|
| 42 | $C_4H_9(OCH_2CH_2)_2OH$ | Toluène | 15 ml | 40 % | 2 500 |
| 43 | tétrahydrofurfurol | Toluène | 10 ml | 50 % | 1 200 |
| 44 | t-BuOH | Toluène | 10 ml | 20 % | 2 750 |
| 45 | t-BuOH | THF | 15 ml | 30 % | 1 700 |
| 46 | $C_4H_9(OCH_2CH_2)_2OH$ | THF | 10 ml | 38 % | 4 000 |
| 47 | $C_2H_5(OCH_2CH_2)_2OH$ | THF | 10 ml | 30 % | 2 500 |
| 48 | $C_4H_9(OCH_2CH_2)_2OH$ | – | 10 ml | 10 % | 800 |

Exemples 49 à 53

Polymérisation de diméthyl-2,3 butadiène

On a procédé comme dans les exemples 42 à 48 précédents. La polymérisation a porté sur 10 ml de monomère dans chaque cas.

Paramètres et résultats sont rapportés dans le tableau 7.

TABLEAU 7

| n° ex | Composé organique hydroxylé | Solvant | Durée | Rendement | Mn |
|---|---|---|---|---|---|
| 49 | $C_4H_9(OCH_2CH_2)_2OH$ | THF | 18 h | 55 % | 6 800 |
| 50 | tétrahydrofurfurol | THF | 10 mn | 100 % | 6 200 |
| 51 | idem | Toluène | 10 mn | 100 % | 2 700 |
| 52 | $C_4H_9(OCH_2CH_2)_2OH$ | Toluène | 2 h | 71 % | 3 300 |
| 53 | t-BuOH | Toluène | 48 h | 31 % | 3 500 |

Exemples 54 et 55

Polymérisation de styrène

On a essayé de faire polymériser 20 ml de styrène à 25°C, sur $18.10^{-3}$ mole d'amidure de potassium.

Au bout de 18 heures, on a obtenu 3% de polymère de masses:

$$Mn = 25\,000, \qquad Mp = 600\,000, \qquad I = \text{(exemple 54)}.$$

En se plaçant dans les mêmes conditions, mais en présence de $3.10^{-3}$ mole de $C_2H_5(OCH_2CH_2)_2OH$ mélangé avec $18.10^{-3}$ mole d'amidure de potassium pendant 2 heures à 40°C, en l'absence de solvant, le rendement était de 100% au bout de 2 heures seulement. Le polytyrène obtenu avait pour masses:

$$Mn = 40\,000, \qquad Mp = 600\,000, \qquad I = 15 \text{ (exemple 55)}.$$

Exemples 56 et 57

Polymérisation d'oxyde d'éthylène.

On a préparé l'amorceur à partir de $25.10^{-3}$ mole de $NaNH_2$ et $8{,}3.10^{-3}$ mole de $C_4H_9(OCH_2CH_2)_2OH$ en 2 heures à 40°C dans 20 ml respectivement de THF (exemple 56) et de toluène (exemple 57).

Après évaporation à sec du solvant, on a obtenu:

— dans le premier cas (exemple 56), avec 11,8 ml de monomère, la formation instantanée d'une boue blanche et, après 18 heures, un rendement de 100% en polymère (Mn = 15 000, mesurée par osmométrie),

— dans le second cas (exemple 57), avec 10,6 ml de monomère, la formation instantanée d'une boue

jaunâtre et, au bout de 17 heures, un rendement quantitatif en polymère (Mn = 25 000, mesurée par osmométrie).

Exemples 58 et 59

Polymérisation du carbonate cyclique d'éthyl-2 hydroxyméthyl-2 hexanol (ou éthyl-2 butyl-2 carbonyl dioxy-1,3 propane) de formule

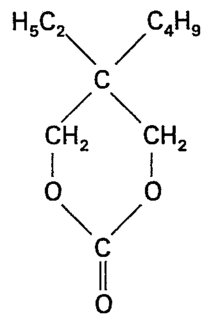

On a placé $25.10^{-3}$ mole de Na $NH_2$ dans un réacteur et versé ensuite 10 ml de monomère. Après 3 heures de chauffage à 45°C aucun signe de polymérisation ne se manifeste. Après encore 24 heures, à température ordinaire, la viscosité du milieu n'a pratiquement pas évolué (exemple 58).

Au contraire si on verse successivement sur la même quantité initiale d'amidure de sodium $8{,}4.10^{-3}$ mole de $C_2H_5(OCH_2CH_2)_2OH$ et 10 ml de monomère et qu'on agite le milieu en le chauffant pendant 3 heures à 45°C, alors ledit milieu s'épaissit progressivement. Si on laisse reposer ensuite le polymère à température ordinaire, l'agitateur est bloqué au bout d'une heure. Le polymère obtenu, tiré à l'aide de 2 ml de méthanol, précipité dans l'hexane puis filtré, possède une masse de 465 (mesurée par osmométrie à tension de vapeur dans le dichloro-1,2 éthane à 37°C), (exemple 59).

Exemples 60 et 61

Polymérisation de la pivalolactone.

On a préparé l'amorceur en chauffant pendant 2 heures à 40°C, $25.10^{-3}$ mole de $NaNH_2$ et $8{,}5.10^{-3}$ mole de $C_2H_5(OCH_2CH_2)_2OH$.

On est revenu à la température ordinaire, après quoi on a injecté 10 ml de monomère sur l'amorceur. Le milieu prend en masse instantanément. La réaction violente et exothermique a un rendement quantitatif en polymère dont le point de fusion est de 180°C (exemple 60).

On a tenté de réaliser la même polymérisation à l'aide d'amidure de sodium seul, toutes autres conditions étant semblables. Dans ce cas la polymérisation ne se produit pas instantanément et il faut attendre deux heures avant que la viscosité du milieu commence à augmenter (exemple 61).

Exemple 62

Polymérisation de méthacrylate de méthyle à l'aide d'amidure de lithium et de $C_4H_9(OCH_2CH_2)_2OH$.

On a placé $25.10^{-3}$ mole de $LiNH_2$ et $8{,}3.10^{-3}$ mole de $C_4H_9(OCH_2CH_2)_2OH$ dans le réacteur de polymérisation et introduit 10 ml de monomère immédiatement après le polyéther alcool.

Au bout de 4 heures à 35°C, on a tué le polymère par addition de méthanol, puis on l'a précipité dans le méthanol et filtré. Le polyméthacrylate de méthyle obtenu a une masse moléculaire en nombre de 5 000. Le rendement est de 25%.

On a effectué des spectres infra-rouge des polymères obtenus dans les exemples 17, 43, 48 et 59. On a observé dans chaque spectre l'existence d'une bande intense d'absorption centrée entre 1600 et 1630 $cm^{-1}$, correspondant à la fonction amino terminant ces polymères.

Il est à noter que toutes les polymérisations rapportées dans les exemples précédents ont été effectuées sous atmosphère d'argon.

Exemples 63 à 67

Polymérisation du méthacrylate de méthyle.

On a préparé l'amorceur en 2 heures, à 40°C, sous agitation à partir de 8,3 mM d'activant et 25 mM d'amidure de lithium. On a ensuite coulé 10 ml de méthacrylate de méthyle et on a laissé la polymérisation s'effectuer à 40°C. Au bout du temps indiqué, on a tué le polymère à l'aide de méthanol et on a observé les rendements, les masses et les indices indiqués au tableau 8.

TABLEAU 8

| n° ex | Composé associé | Durée | Rendement | Mn | Mp | I |
|---|---|---|---|---|---|---|
| 63 | octanol | 2 h | 25 % | 12 000 | 18 000 | 1,5 |
| 64 | isopropanol | 1 h | 25 % | 8 900 | 12 500 | 1,4 |
| 65 | $CH_3OCH_2CH_2OH$ | 2 h | 45 % | 7 100 | 9 200 | 1,3 |
| 66 | $C_2H_5(OCH_2CH_2)_2OH$ | 2 h | 70 % | 9 900 | 11 900 | 1,2 |
| 67 | alcool allylique | 2 h | 30 % | 8 100 | 11 300 | 1,4 |

Exemples 68 à 72

Polymérisation de méthacrylonitrile.

On a procédé commue aux exemples 63—67 avec $LiNH_2$.

La polymérisation du volume de monomère indiqué a été effectuée à 35°C. La réaction a été arrêtée au bout de 15 min. Les résultats sont rapportés dans le tableau 9.

TABLEAU 9

| n° ex | Volume monomère | Rendement | Mn |
|---|---|---|---|
| 68 | 2 ml | 47 % | 3 200 |
| 69 | 4 ml | 43 % | 4 100 |
| 70 | 3 ml | 52 % | 3 800 |
| 71 | 3 ml | 60 % | 4 100 |
| 72 | 3 ml | 62 % | 5 200 |

Exemples 73 à 78

On a opéré en tout point comme aux exemples 63—67 en remplaçant $LiNH_2$ par $NaNH_2$ et en utilisant les composés organiques hydroxylés indiqués ci-aprères, en même temps que les résultats obtenus, dans le tableau 10.

TABLEAU 10

| n° ex | Composé organique hydroxylé | Duree | Rendement | Mn | Mp | I |
|---|---|---|---|---|---|---|
| 73 | heptanol | 2 h | 15 % | 9 200 | 13 800 | 1,50 |
| 74 | octanol | 2 h | 85 % | 10 800 | 15 500 | 1,44 |
| 75 | isopropanol | 2 h | 90 % | 9 400 | 14 000 | 1,49 |
| 76 | alcool allylique | 1,5 h | 100 % | 2 700 | 3 700 | 1,35 |
| 77 | $CH_3OCH_2CH_2OH$ | 2 h | 65 % | 11 000 | 18 000 | 1,63 |
| 78 | $C_2H_5NHCH_2CH_2OH$ | 2 h | 25 % | 8 700 | 12 000 | 1,5 |

Exemples 79 à 83

On a polymérisé de l'acrylonitrile à l'aide de $LiNH_2$ en utilisant 8,3 mM de composé hydroxylé et 25 mM de $LiNH_2$.

L'amorceur a été préparé comme décrit aux exemples 63—67. Les résultats obtenus sont rapportés dans le tableau 11. La température de la polymérisation était de 40°C et sa durée de 15 min.

TABLEAU 11

| n° ex | Composé organique hydroxylé | Volume monomère | Rendement | Mn |
|---|---|---|---|---|
| 79 | heptanol | 4 ml | 50 % | 12 500 |
| 80 | octanol | 4 ml | 53 % | 14 300 |
| 81 | isopropanol | 4 ml | 38 % | 17 800 |
| 82 | alcool allylique | 5 ml | 60 % | 14 100 |
| 83 | $CH_3OCH_2CH_2OH$ | 5 ml | 62 % | 13 300 |

Exemples 84 à 88

On a polymérisé du méthacrylonitrile à l'aide d'amorceur préparé comme aux exemples 63—67 à l'aide de 25 mM de $NaNH_2$ et 8 mM de composé organique hydroxylé. La réaction de polymérisation, effectuée à 30°C est instantanée. Les résultats obtenus sont indiqués au tableau 12.

TABLEAU 12

| n° ex | Volume monomère | Composé organique hydroxylé | Rendement | Mn |
|---|---|---|---|---|
| 84 | 3 ml | heptanol | 69 % | 4 800 |
| 85 | 4 ml | octanol | 80 % | 6 200 |
| 86 | 4 ml | isopropanol | 95 % | 4 900 |
| 87 | 3 ml | alcool allylique | 100 % | 5 700 |
| 88 | 5 ml | $CH_3OCH_2CH_2OH$ | 100 % | 4 900 |

Exemples 89 à 93

On a opéré comme aux exemples 84 à 88, en utilisant l'amorceur pour polymériser de l'acrylonitrile. La réaction est instantanée à 30°C. Les résultats obtenus sont indiqués dans le tableau 13.

TABLEAU 13

| n° ex | Volume monomère | Composé organique hydroxylé | Rendement | Mn |
|---|---|---|---|---|
| 89 | 5 ml | heptanol | 70 % | 22 000 |
| 90 | 8 ml | octanol | 90 % | 17 500 |
| 91 | 4 ml | isopropanol | 95 % | 19 400 |
| 92 | 4 ml | alcool allylique | 100 % | 23 100 |
| 93 | 5 ml | $CH_3OCH_2CH_2OH$ | 100 % | 25 200 |

**Revendications**

1. Procédé de polymérisation ou de copolymérisation anionique des monomères vinyliques, diéniques et hétérocycliques en l'absence de solvant caractérisé en ce qu'on effectue la réaction en présence d'un amorceur constitué d'un amidure de métal alcalin choisi dans le groupe constitué par le

sodium, le potassium et le lithium et du sel du même métal alcalin d'au moins un composé organique hydroxylé.

2. Procédé de polymérisation ou de copolymérisation selon la revendication 1, caractérisé en ce que l'amorceur est obtenu en évaporant à sec un mélange de l'amidure alcalin et d'au moins un composé organique hydroxylé dans un solvant organique aprotique et peu sensibles aux attaques des bases.

3. Procédé de polymérisation ou de copolymérisation selon la revendication 2, caractérisé en ce que le solvant organique a une constante diélectrique inférieure à 10 à 25°C.

4. Procédé de polymérisation ou de copolymérisation selon l'une quelconque des revendications 2 ou 3 caractérisé en ce que, avant l'évaporation à sec, le mélange est porté à une température comprise entre 20 et 60°C, de préférence pendant au moins une heure et sous agitation.

5. Procédé de polymérisation ou de copolymérisation selon la revendication 1, caractérisé en ce que l'amorceur est obtenu après mélange intime de l'amidure alcalin avec au moins un composé organique hydroxylé, en l'absence de solvant.

6. Procédé de polymérisation ou de copolymérisation selon la revendication 5, caractérisé en ce que le mélange intime est réalisé à une température comprise entre 20 et 60°C.

7. Procédé de polymérisation ou de copolymérisation selon la revendication 1, caractérisé en ce que l'amorceur est formé en mettant en présence l'amidure alcalin et au moins un composé organique hydroxylé, en introduisant le monomère sur le tout puis en agitant le milieu ainsi obtenu.

8. Procédé de polymérisation ou de copolymérisation selon l'une quelconque des revendications 2 à 7, caractérisé en ce que l'amorceur utilisé est préparé en utilisant de 2 à 3,5 moles d'amidure alcalin par mole de fonction hydroxyle du composé organique hydroxylé.

9. Polymères et copolymères obtenus par le procédé selon l'une quelconque des revendications précédentes.

## Patentansprüche

1. Verfahren zur anionischen Polymerisation oder Copolymerisation der vinylhaltigen, dienhaltigen und heterozyklischen Monomeren in der Abwesenheit von Lösungsmittel, dadurch gekennzeichnet, daß man die Reaktion in Anwesenheit eines Auslösers durchführt, der aus einem Amid eines aus der aus Natrium, Kalium und Lithium bestehenden Gruppe gewählten Alkalimetalls und dem Salz des gleichen Metalls wenigstens einer hydroxylierten organischen Verbindung besteht.

2. Verfahren zur Polymerisation oder Copolymerisation nach dem Anspruch 1, dadurch gekennzeichnet, daß der Auslöser erhalten wird, indem man ein Gemisch des Alkaliamids und wenigstens einer hydroxylierten organischen Verbindung in einem aprotischen und gegenüber den Angriffen der Basen wenig empfindlichen organischen Lösungsmittels zur Trockne eindampft.

3. Verfahren zur Polymerisation oder Copolymerisation nach dem Anspruch 2, dadurch gekennzeichnet, daß das organische Lösungsmittel eine Dielektrizitätskonstante unter 10 bei 25°C hat.

4. Verfahren zur Polymerisation oder Copolymerisation nach irgendeinem der Ansprüche 2 oder 3, dadurch gekennzeichnet, daß das Gemisch vor dem Eindampfen zur Trockne auf eine Temperatur zwischen 20 und 60°C, vorzugsweise während wenigstens einer Stunde und unter Rühren, gebracht wird.

5. Verfahren zur Polymerisation oder Copolymerisation nach dem Anspruch 1, dadurch gekennzeichnet, daß der Auslöser nach innigem Vermischen des Alkali mit wenigstens einer hydroxylierten organischen Verbindung in der Abwesenheit von Lösungsmittel erhalten wird.

6. Verfahren zur Polymerisation oder Copolymerisation nach dem Anspruch 5, dadurch gekennzeichnet, daß das innige Vermischen bei einer Temperatur zwischen 20 und 60°C durchgeführt wird.

7. Verfahren zur Polymerisation oder Copolymerisation nach dem Anspruch 1, dadurch gekennzeichnet, daß der Auslöser gebildet wird, indem man das Alkali und wenigstens eine hydroxylierte organische Verbindung durch Einführen des Monomeren auf das Ganze vorsieht und danach das so erhaltene Medium rührt.

8. Verfahren zur Polymerisation oder Copolymerisation nach irgendeinem der Ansprüche 2 bis 7, dadurch gekennzeichnet, daß der verwendete Auslöser hergestellt wird, indem man 2 bis 3,5 Mole Alkali je Hydroxygruppenmol der hydroxylierten organischen Verbindung verwendet.

9. Polymeren und Copolymeren, die durch das Verfahren nach irgendeinem der vorstehenden Ansprüche erhalten sind.

## Claims

1. A process for the anionic polymerisation or copolymerisation of vinylic, dienic and heterocyclic monomers in the absence of solvent characterised in that the reaction is carried out in the presence of an initiator comprising an amide of an alkali metal selected from the group consisting of sodium, potassium and lithium and a salt of the same alkali metal with at least one hydroxylic organic compound.

2. A polymerisation or copolymerisation process according to claim 1, characterised in that the initiator is obtained by evaporating to dryness a mixture of the alkali metal amide and the at least one hydroxylic organic compound in an aprotic organic solvent which is relatively insensitive to attack by bases.

3. A polymerisation or copolymerisation process according to claim 2, characterised in that the organic solvent has a dielectric constant less than 10 at 25°C.

4. A polymerisation or copolymerisation process according to any one of claims 2 or 3, characterised in that, before the evaporation to dryness, the mixture is brought to a temperature between 20 and 60°C, preferably for at least one hour with stirring.

5. A polymerisation or copolymerisation process according to claim 1, characterised in that the initiator is obtained by intimate mixing of the alkali metal amide with the at least one hydroxylic organic compound, in the absence of solvent.

6. A polymerisation or copolymerisation process according to claim 5, characterised in that the initmate mixture is achieved at a temperature between 20 and 60°C.

7. A polymerisation or copolymerisation process according to claim 1, characterised in that the initiator is formed by placing the alkali metal amide in contact with the at least one hydroxylic organic compound, introducing the monomer on to the whole and then stirring the medium thus obtained.

8. A polymerisation or copolymerisation process according to any one of claims 2 to 7, characterised in that the initiator used is prepared by employing 2 to 3.5 moles of alkali metal amide per hydroxyl function of the hydroxylic organic compound.

9. Polymers and copolymers obtained by the process according to any one of the preceding claims.